(19) Europäisches Patentamt / European Patent Office / Office européen des brevets

(11) **EP 1 961 785 A1**

(12) **EUROPEAN PATENT APPLICATION**
published in accordance with Art. 158(3) EPC

(43) Date of publication:
**27.08.2008 Bulletin 2008/35**

(51) Int Cl.:
*C08L 21/00* *(2006.01)* *B60C 1/00* *(2006.01)*

(21) Application number: **06843167.5**

(22) Date of filing: **25.12.2006**

(86) International application number:
**PCT/JP2006/325763**

(87) International publication number:
**WO 2007/077788 (12.07.2007 Gazette 2007/28)**

(84) Designated Contracting States:
**DE FR IT**

(30) Priority: **06.01.2006 JP 2006001704**

(71) Applicants:
• **SUMITOMO RUBBER INDUSTRIES, LTD.**
**Kobe-shi,**
**Hyogo 651-0072 (JP)**
• **Ube Industries, Ltd.**
**Ube-shi,**
**Yamaguchi-ken 755-8633 (JP)**

(72) Inventors:
• **ISHIDA, Hirokazu**
**Hyogo 651-0072 (JP)**
• **HIRO, Masataka**
**Hyogo 651-0072 (JP)**
• **WADA, Takashi**
**Chiba 290-0045 (JP)**

(74) Representative: **Manitz, Finsterwald & Partner**
**GbR**
**Martin-Greif-Strasse 1**
**80336 München (DE)**

(54) **RUBBER COMPOSITION FOR TREAD**

(57) Abrasion resistance can be improved without impairing tip cut resistance by using polybutadiene comprising specific syndiotactic-1,2-polybutadiene in a tread rubber. Namely, the present invention provides a rubber composition for a tread which comprises a rubber component comprising 10 to 30 % by weight of a butadiene rubber in which syndiotactic-1,2-polybutadiene having an average primary particle diameter of not more than 100 nm is dispersed in the butadiene rubber.

EP 1 961 785 A1

**Description**

TECHNICAL FIELD

The present invention relates to a rubber composition for a tread.

BACKGROUND ART

Since particularly a tire for heavy load for an autotruck, a bus, etc. among tires has a tendency of easily generating heat (low heat build-up property is easily deteriorated), in order to suppress the heat generation, for instance, a method of enlarging a particle diameter of carbon black, a method of decreasing an amount of carbon black or the like method has been employed. However, in any of the cases, there have been a problem that abrasion resistance is lowered.

In order to improve abrasion resistance, a butadiene rubber (BR) as a rubber component has been added, in this case, however, along with using a tire, strength and elongation of a tread are lowered and cracks are caused on the tread surface, thus, there has been a problem that a large number of narrow pieces of the tread rubber chip away due to running and braking wheels (tip cut resistance is lowered).

As described above, it is intensively required for a tire for a heavy load in particular to improve balance among heat build-up property, abrasion resistance and tip cut resistance.

A studless tire which is a tire for driving on an icy road surface has been generally improved in performances on ice by edge effects obtained by introducing a large number of sipings into a tread pattern. However, if the sipings are increased, due to antinomy effects of lowering rigidity of the studless tire, there has been a problem that the edge effects of the studless tire consequently cannot be obtained.

As for properties required for a studless tire, not only performance on ice and rigidity of a tread, but also rubber characteristics such as elongation are further necessary, and how to improve balance of these properties is to be important. It is difficult to improve such balance in particularly in the case of a tire for heavy load for an autotruck, a bus, etc. among studless tires, and improvement of the balance in the studless tire for a heavy load has been intensively desired.

JP-A-2005-225905 and JP-A-2005-247899 disclose a rubber composition for a tire compounded with a butadiene rubber (VCR412 available from Ube Industries, Ltd.) in which syndiotactic-1,2-polybutadiene is dispersed. However, since syndiotactic-1,2-polybutadiene in the butadiene rubber is large (250 nm) an average primary particle diameter and is not adequately dispersed, sufficient performance is not obtained.

DISCLOSURE OF INVENTION

It is an object of the first of the present invention to provide a rubber composition for a tread improved in balance among abrasion resistance, tip cut resistance and heat build-up property of a tread, particularly, a rubber composition suitable for a tread of a tire for heavy load.

Also it is an object of the second of the present invention to provide a rubber composition for a tread improved in balance among on-ice performance, elongation characteristics and hardness of a tread, particularly, a rubber composition suitable for a tread of a studless tire, further specifically for a studless tire for a heavy load.

The first of the present invention relates to a rubber composition for a tread, which comprises a rubber component comprising 10 to 30 % by weight of a butadiene rubber in which syndiotactic-1,2-polybutadiene having an average primary particle diameter of not more than 100 nm is dispersed in the butadiene rubber, and carbon black having a nitrogen adsorbing-specific surface area of 120 to 170 m$^2$/g.

It is preferable that the rubber composition for a tread further comprises not less than 40 % by weight of a natural rubber in the rubber component.

The present invention also relates to a tire having a tread, which comprises the rubber composition for a tread of the first invention described above. The tire is suitable for a tire for a heavy load such as tires for a bas and an autotruck.

The second of the present inventions relates to a rubber composition for a tread, which is used for a studless tire and comprises a rubber component comprising 10 to 30 % by weight of a butadiene rubber in which syndiotactic-1,2-polybutadiene having an average primary particle diameter of not more than 100 nm is dispersed in the butadiene rubber.

It is preferable that the above rubber composition for a tread used for a studless tire further comprises not less than 40 % by weight of a natural rubber in the rubber component.

The present invention also relates to a studless tire having a tread, which comprises the rubber composition for a tread of the second invention descried above. The tire is suitable for a tire for a heavy load such as tires for a bas and an autotruck.

BEST MODE FOR CARRYING OUT THE INVENTION

The first and the second of the present invention are common with respect to using a rubber composition comprising a rubber component comprising 10 to 30 % by weight of a butadiene rubber in which syndiotactic-1,2-polybutadiene having an average primary particle diameter of not more than 100 nm is dispersed in of the butadiene rubber (hereinafter referred to as "SPB-containing BR").

Firstly, the butadiene rubber in which syndiotactic-1,2-polybutadiene having an average primary particle diameter of not more than 100 nm is dispersed (hereinafter, may be referred to as "BR") is explained.

In the SPB-containing BR, syndiotactic-1,2-polybutadiene (hereinafter referred to as "SPB") is sufficiently finely dispersed in BR that is to be a matrix, and an average primary particle diameter of the SPB in BR is extremely small.

In the SPB-containing BR, the average primary particle diameter of the SPB in BR is not more than 100 nm, preferably not more than 50 nm. When the average primary particle diameter of SPB is more than 100 nm, sufficient improvement effects of physical properties due to containing the SPB in BR cannot be obtained. The lower limit of the average primary particle diameter of the SPB is 10 nm, preferably 20 nm from the viewpoint of availability. The average primary particle diameter of the SPB contained in the BR is measured as an average value of an absolute maximum length obtained by an image analysis of pictures of a transmission electron microscope.

A content of the SPB in the SPB-containing BR is preferably not less than 10 % by weight, more preferably not less than 12 % by weight. When the content is less than 10 % by weight, there is a tendency that sufficient reinforcing property cannot be obtained, and in addition, sufficient tip cut resistance cannot be obtained. The content of the SPB in the SPB-containing BR is preferably not more than 50 % by weight, more preferably not more than 40 % by weight, further preferably not more than 20 % by weight. When the content is more than 50 % by weight, there is a tendency that moldability is lowered and in addition, sufficient tip cut resistance cannot be obtained. The content of the SPB in the SPB-containing BR is indicated by an amount of an insoluble matter in a boiling n-hexane.

The SPB in the SPB-containing BR is preferably crystal from the viewpoint of imparting reinforcing property within a range from a normal temperature to a temperature at using a tire.

A preparation process of the SPB-containing BR satisfying the above conditions is not particularly limited, and the SPB-containing BR can be prepared by a preparation process disclosed in JP-A-2005-247899 or the like method.

Then, the rubber composition for a tread of the first of the present invention is explained in the following.

In the rubber composition for a tread of the first invention, a content of SPB-containing BR in the rubber component is not less than 10 % by weight, and more preferably not less than 15 % by weight. When the content is less than 10 % by weight, sufficient rubber reinforcing property cannot be obtained. The content of SPB-containing BR in the rubber component is not more than 30 % by weight, and more preferably not more than 25 % by weight. When the content is more than 30 % by weight, rubber hardness is largely increased, and tip cut resistance is lowered.

It is preferable that in the rubber composition for a tread of the first invention, a natural rubber (hereinafter may be referred to as "NR" in some cases) is further compounded as a rubber component.

In the rubber composition for a tread of the first invention, a content of NR in the rubber component is preferably not less than 40 % by weight, and more preferably not less than 50 % by weight. When the content is less than 40 % by weight, there is a tendency of being disadvantage with respect to tip cut resistance and patterns or block cracks. The content of NR is preferably not more than 90 % by weight, more preferably not more than 80 % by weight. When the content is more than 90 % by weight, there is a tendency that abrasion resistance is lowered, and crack growth resistance is not sufficient.

As the rubber component, in addition to the above-described SPB-containing BR and NR, general butadiene rubbers (BR) without containing cydiotactic-1,2-polybutadiene, and styrene-butadiene rubber (hereinafter referred to as "SBR") can be compounded together.

The rubber composition for a tread of the first invention contains carbon black having a nitrogen adsorbing-specific surface area ($N_2SA$) of 120 to 170 $m^2/g$ as a reinforcing filler with the above rubber components.

The nitrogen adsorbing-specific surface area ($N_2SA$) of carbon black is 120 to 170 $m^2/g$, preferably 140 to 160, $m^2/g$. In the first invention, when $N_2SA$ is less than 120 $m_2/g$, there is a tendency that abrasion resistance cannot be sufficiently obtained. When $N_2SA$ is more than 170 $m^2/g$, there is a tendency that heat build-up property becomes large, which is disadvantageous to from the viewpoint of damages on tires.

An amount of carbon black is preferably not less than 30 to 60 parts by weight on the basis of 100 parts by weight of the rubber component. When the amount is less than 30 parts by weight, there is a tendency that sufficient abrasion resistance cannot be obtained. When the amount is more than 60 parts by weight, there is a tendency that a rubber easily generates heat, which is disadvantageous from the viewpoint of damages on tires. Carbon black having $N_2SA$ of less than 120 $m^2/g$ can be used together.

In addition, silica may be used together as a reinforcing filler. Silica is not particularly limited, and general silica such as VN3 can be used.

An amount of silica is preferably 10 to 50 parts by weight on the basis of 100 parts by weight of the rubber component. When the amount is less than 10 parts by weight, there is a tendency that effects of compounding silica cannot be sufficiently obtained. The amount of more than 50 parts by weight tend to be disadvantageous from the viewpoint of abrasion resistance.

In the rubber composition for a tread of the first invention, it is preferable to compound polyethylene glycol (PEG) from the viewpoint of improving processability. An amount of PEG is preferably 0.1 to 5 parts by weight on the basis of 100 parts by weight of the rubber component. When the amount is less than 0.1 part by weight, there is a tendency that effects of compounding PEG cannot be sufficiently obtained. The amount of more than 5 parts by weight tend to be disadvantageous from the viewpoint of abrasion resistance.

In the rubber composition for a tread of the first invention, in addition to the above-described components, agents generally used in the rubber industries such as stearic acid, an antioxidant, a wax, zinc oxide, a vulcanizing agent and a vulcanization accelerator can be compounded.

The rubber composition for a tread of the first invention can be used for preparation of a tire by a general process. Namely, an unvulcanized rubber composition obtained by kneading the rubber component, a reinforcing filler, etc. is extrusion-processed while being adjusted to the shape of a tread, and further, the obtained extruded product is laminated with other tire parts to form an unvulcanized tire on a tire molding machine. Further, this unvulcanized tire is vulcanized in a vulcanizer to prepare a tire.

A tire having a tread produced using the rubber composition for a tread of the first invention is suitably used for a tire for a heavy load such as tires for a bus, an autotruck etc., and there can be provided a tire in which balance among abrasion resistance, tip cut resistance and heat build-up property is improved.

The second of the present inventions relates to a rubber composition for a tread used for a studless tire, which comprises a rubber component comprising 10 to 30 % by weight of a butadiene rubber in which syndiotactic-1,2-polybutadiene having an average primary particle diameter of not more than 100 nm is dispersed in the butadiene rubber.

The second of the present inventions was completed by finding that a studless tire produced using a rubber composition for a tread comprising a specific amount of SPB-containing BR has not been known, and also finding that, surprisingly, balance among on-ice performances, elongation characteristics and hardness of the tire is improved.

In the rubber composition for a tread used for the second of the present inventions, the same respective components as in the rubber composition for a tread of the first invention can be adopted except that carbon black to be compounded is not particularly limited, thus, the explanation regarding the first invention is cited for the second invention.

Carbon black which can be compounded in the second invention preferably has a nitrogen adsorbing-specific surface area ($N_2SA$) of 100 to 170 $m^2/g$, further more preferably 120 to 160 $m^2/g$. When $N_2SA$ is less than 100 $m^2/g$, there is a tendency that abrasion resistance is not sufficiently obtained. When $N_2SA$ is more than 170 $m^2/g$, there is a tendency that heat build-up property becomes large, which is disadvantageous from the viewpoint of damages on a tire.

Though performances on an icy road surface is improved by compounding SPB-containing BR in a specific amount, it is preferable to further compound calcium carbonate particles in the rubber composition for a tread of the second invention used for a studless tire. The rubber composition for a tread compounded with the particles is used for a tread part of the studless tire, thereby, the following effects (1) to (4) can be obtained; (1) an effect that the calcium carbonate particles themselves scratch an icy and snowy road surface, (2) an effect that pores existing in the calcium carbonate particles absorbs and remove water on an icy and snowy road surface, (3) an effect that fine holes generated by dropping off calcium carbonate particles absorb and remove water on an icy and snowy road surface, and (4) an effect that rims of the fine holes generated by dropping off calcium carbonate particles function as edges, and scratch an icy and snowy road surface. As described above, improvement of performances on an icy surface is largely caused by the effect of removing water by the pores existing in calcium carbonate particles or the fine holes obtained by dropping off calcium carbonate particles as well as the scratching effect.

As for the calcium carbonate particles, calcium carbonate particles generally commercially available can be used, and particularly, calcium carbonate particles obtained from living bodies (calcium carbonate particles derived from living bodies) are preferable.

Examples of the calcium carbonate particles derived from living bodies are egg shell powder (for example, hen's egg shell powder). Particularly, from the viewpoint of enabling a mass supply and being obtainable at the lowest cost, egg shell powder is preferable as the calcium carbonate particles derived from living bodies.

An average primary particle diameter of calcium carbonate particles is preferably not less than 5 $\mu$m, more preferably not less than 10 $\mu$m. When the average primary particle diameter is less than 5 $\mu$m, since holes generated by dropping off the particles become too small, improvements in water absorption effect and scratching effect cannot be obtained, and there is a tendency that on-ice performance is lowered. The average primary particle diameter of calcium carbonate particles is preferably not more than 150 $\mu$m, more preferably not more than 100 $\mu$m. When the average primary particle diameter is more than 150 $\mu$m, there is a tendency that abrasion resistance and strength of rubber hardness are remarkably lowered.

An amount of the calcium carbonate particles is preferably not less than 5 parts by weight on the basis of 100 parts by weight of a rubber component, more preferably not less than 10 parts by weight. When the amount of the calcium carbonate particles is less than 5 parts by weight, the number of generated fine holes is not sufficient, and there is a tendency that on-ice performance cannot be sufficiently improved. The amount of the calcium carbonate particles is preferably not more than 25 parts by weight on the basis of 100 parts by weight of a rubber component, more preferably not more than 20 parts by weight. When the amount of the calcium carbonate particles is more than 25 parts by weight, there is a tendency that abrasion resistance and strength at break of a rubber are remarkably lowered.

The tire of the second of the present invention is suitably used as a studless tire, particularly as heavy road tires for a bus, an autotruck, etc.

EXAMPLES

The present invention is specifically explained based on Examples, but the present invention is not limited only thereto.

Various compounding agents used in the present invention are shown in the following.

NR:TSR20

BR150L: available from Ube Industries, Ltd.

VCR412: available from Ube Industries, Ltd. (BR having dispersed syndiotactic-1,2-polybutadiene crystal, content of syndiotactic-1,2-polybutadiene: 12 % by weight, an average primary particle diameter of syndiotactic-1,2-polybutadiene crystal: 250 nm)

VCR prototype: Prototype available from Ube Industries, Ltd. (BR having dispersed syndiotactic-1,2-polybutadiene crystal, content of syndiotactic-1,2-polybutadiene: 12 % by weight, an average primary particle diameter of syndiotactic-1,2-polybutadiene crystal: 43 nm)

CB N110: Carbon black N110 ($N_2SA$: 140 $m^2/g$) available from Mitsubishi Chemical Corporation

CB N220: Carbon black N220 ($N_2SA$: 115 $m^2/g$) available from Mitsubishi Chemical Corporation

Silica VN3: Silicon dioxide available from Deggussa Co.

Egg shell powder: available from Q.P. Corporation (average primary particle diameter: 50 $\mu$m)

Zinc oxide: available from Toho Zinc Co., Ltd.

Stearic acid: available from NOF Corporation

Antioxidant: 6C available from Seiko Chemical Co., Ltd.

Wax: OZOACE wax available from NIPPON SEIRO Co., Ltd.

PEG: PEG 4000 available from NOF Corporation

Sulfur powder: available from Tsurumi Chemical Industry Co., Ltd.

Vulcanization accelerator NS: TBBS available from Ouchi Shinko Chemical Industrial Co., Ltd.

Average primary particle diameters of VCR412 and VCR prototype were measured as an average value of absolute maximum lengths obtained by an image analysis of pictures of a transmission electron microscope.

A nitrogen adsorbing-specific surface area ($N_2SA$) of CB N330 was measured according to a method of obtaining a specific surface area by a nitrogen adsorption method of JIS K 6217-2.

(Process for preparing VCR prototype)

A 2L stainless steel aging vessel equipped with a stirrer and maintained at 20°C was charged with 12.5L per hour of a mixture (water content: 2.09 mmol/L) (containing 20 mg/L of carbon disulfide) comprising 32 % by weight of 1,3-butadiene and 68 % by weight of C4 distillate containing cis-2-butene as the main component, which was dissolved in a specific amount of water, while supplying diethylaluminum chloride (10 % by weight in n-hexane, 3.13 mmol/L), to adjust a molar ratio of diethylaluminum chloride/water in the solution in this reaction vessel to be 1.5. The obtained aged solution was supplied in a 5L stainless steel cis polymerization vessel equipped with a stirrer and maintained at 40°C. To this cis polymerization vessel were supplied cobalt octoate (0.0117 mmol/L of cobalt octoate, n-hexane solution) and 1,2-butadiene (8.2 mmol/L of 1,2-butadiene, 1.535 mol/L in n-hexane solution) as a molecular weight adjuster. The obtained cis polymerization solution was supplied to a 5L stainless steel 1,2 polymerization vessel equipped with a ribbon-shaped stirrer and continuously polymerized at 35°C for 10 hours. To this 1,2 polymerization vessel was continuously supplied triethylaluminum (10 % by weight in n-hexane solution, 4.09 mmol/L). The obtained polymerization solution was supplied to a mixing vessel equipped with a stirrer, thereto was added 2,6-di-t-butyl-p-crezol in an amount of 1 part by weight on the basis of 100 parts by weight of a rubber, and a small amount of methanol was further added. Then, after terminating the polymerization, unreacted 1,3-butadiene and C4 distillate were distilled to be removed, followed by vacuum drying at normal temperature to obtain 8.3 kg of VCR prototype.

EXAMPLES 1 to 7 and COMPARATIVE EXAMPLES 1 to 16

(Process of producing a test tire)

The above compounding agents except for sulfur and a vulcanization accelerator were kneaded by a banbury mixer under the conditions of a kneading temperature of 150°C and a kneading time of 4 minutes according to compounding contents in Tables 1 to 4.

Then, the sulfur and vulcanization accelerator were added, and the mixture was kneaded by using an open roll under the conditions of a kneading temperature of 40°C to 60°C and a kneading time of 4 minutes. The kneaded product was extrusion-molded to prepare a rubber sheet by using an extruder.

The obtained rubber sheet was molded into the shape of a tread and laminated with other tire parts, and vulcanized for 35 minutes at 150°C, thereby, respective test tires (tire size 11R22.5) of Examples 1 to 7 and Comparative Examples 1 to 16 were prepared and used for the following measuring tests.

<Abrasion test>

Using test pieces cut out from the test tires, volume losses of respective test pieces were measured with a Lamboum abrasion tester (manufactured by Iwamoto Seisakusyo K.K.) under the conditions of a testing time of 5 minutes, a test surface speed of 80 m/min, an amount of falling sand of 15 g/min, a load of 3.0 kgf, and a slip ratio of 20 %. According to the following calculation equation, the volume losses were expressed as indices respectively (abrasion resistance indices). The larger the index is, the more excellent the abrasion resistance is.

$$\text{(Abrasion resistance index of Examples 1 to 3 and Comparative Examples 1 to 7)} = \text{(volume loss of Comparative Example 1)}/\text{(volume loss of Examples 1 to 3 and Comparative Examples 1 to 7)} \times 100$$

$$\text{(Abrasion resistance index of Examples 4 to 7 and Comparative Examples 8 to 16)} = \text{(volume loss of Comparative Example 8)}/\text{(volume loss of Examples 4 to 7 and Comparative Examples 8 to 16)} \times 100$$

<Viscoelasticity test>

By using test pieces (width of 4 mm, thickness of 1.8 to 2.2 mm, and length of 30 mm) cut out from the test tires, loss tangent tan δ of each composition at 2 % strain was measured with a viscosity spectrometer VES (manufactured by Iwamoto Seisakusyo K.K.) under the conditions of a temperature of 70°C, an initial strain of 10 % and a frequency of 10 Hz. Then, a loss tangent is expressed as an index by the following calculation equation to evaluate heat build-up property. The higher the index is, the more favorable heat build-up property is.

$$\text{(Heat build-up index of Examples 4 to 7 and Comparative Examples 8 to 16)} = \text{(tan δ of Comparative Example 8)}/\text{(tan δ of Examples 4 to 7 and Comparative Examples 8 to 16)} \times 100$$

<Tip cut resistance>

Test pieces cut out from the test tires were respectively subjected to aerothermal aging in a gear oven tester at 80°C for 10 days, thereafter, a tensile test according to JIS K6251 was carried out, and a strength at break (TB) and an elongation at break (EB) of the test pieces were measured. Then, a product of the obtained strength at break by elongation at break (TB x EB) was calculated, and the product was respectively expressed as an index to evaluate tip cut resistance. The larger the index is, the more preferable the tip cut resistance is.

(Tip cut resistance index of Examples 1 to 3 and Comparative Examples 1 to 7) = (TB × EB of Examples 1 to 3 and Comparative Examples 1 to 7)/(TB × EB of Comparative Example 1) × 100

(Tip cut resistance index of Examples 4 to 7 and Comparative Examples 8 to 16) = (TB × EB of Examples 4 to 7 and Comparative Examples 8 to 16)/(TB × EB of Comparative Example 8) × 100

Results of the measurements are shown in Tables 1 to 4.

TABLE 1

|  | Com. Ex. | | | | | | |
|---|---|---|---|---|---|---|---|
|  | 1 | 2 | 3 | 4 | 5 | 6 | 7 |
| Amounts (part by weight) | | | | | | | |
| NR | 100 | 100 | 80 | 80 | 70 | 95 | 60 |
| BR150L | - | - | 20 | 20 | 30 | - | - |
| VCR prototype | - | - | - | - | - | 5 | 40 |
| CB N110 | 50 | 40 | 50 | 40 | 30 | 50 | 40 |
| Silica VN3 | - | 10 | - | 10 | 20 | - | - |
| Zinc oxide | 3 | 3 | 3 | 3 | 3 | 3 | 3 |
| Stearic acid | 4 | 4 | 4 | 4 | 4 | 4 | 4 |
| Antioxidant | 2.5 | 2.5 | 2.5 | 2.5 | 2.5 | 2.5 | 2.5 |
| Wax | 1 | 1 | 1 | 1 | 1 | 1 | 1 |
| PEG | - | 0.4 | - | 0.4 | 0.4 | - | - |
| Sulfur powder | 1 | 1 | 1 | 1 | 1 | 1 | 1 |
| Vulcanization accelerator NS | 1.5 | 1.5 | 1.5 | 1.5 | 1.5 | 1.5 | 1.5 |
| Evaluations | | | | | | | |
| Abrasion resistance index | 100 | 90 | 118 | 107 | 110 | 100 | 108 |
| Tip cut resistance index | 100 | 105 | 89 | 93 | 87 | 103 | 97 |

TABLE 2

|  | Ex. | | |
|---|---|---|---|
|  | 1 | 2 | 3 |
| Amounts (part by weight) | | | |
| NR | 90 | 80 | 70 |
| BR150L | - | - | - |
| VCR412 | - | - | - |
| VCR prototype | 10 | 20 | 30 |
| CB N110 | 48 | 45 | 35 |
| Silica VN3 | 8 | 10 | 15 |
| Zinc oxide | 3 | 3 | 3 |
| Stearic acid | 4 | 4 | 4 |
| Antioxidant | 2.5 | 2.5 | 2.5 |

(continued)

| Amounts (part by weight) | | | |
|---|---|---|---|
| Wax | 1 | 1 | 1 |
| PEG | 0.4 | 0.4 | 0.4 |
| Sulfur powder | 1 | 1 | 1 |
| Vulcanization accelerator NS | 1.5 | 1.5 | 1.5 |
| Evaluations | | | |
| Abrasion resistance index | 108 | 114 | 110 |
| Tip cut resistance index | 105 | 107 | 104 |

TABLE 3

| | Com. Ex. | | | | | | | | |
|---|---|---|---|---|---|---|---|---|---|
| | 8 | 9 | 10 | 11 | 12 | 13 | 14 | 15 | 16 |
| Amounts (part by weight) | | | | | | | | | |
| NR | 100 | 100 | 80 | 80 | 50 | 80 | 50 | 50 | 60 |
| BR150L | - | - | 20 | 20 | 50 | - | 45 | - | - |
| VCR412 | - | - | - | - | - | 20 | - | - | - |
| VCR prototype | - | - | - | - | - | - | 5 | 50 | 40 |
| CB N110 | 50 | 40 | 40 | | 40 | 40 | 40 | 30 | 25 |
| CB N220 | - | - | - | 50 | - | - | - | - | - |
| Zinc oxide | 3 | 3 | 3 | 3 | 3 | 3 | 3 | 3 | 3 |
| Stearic acid | 4 | 4 | 4 | 4 | 4 | 4 | 4 | 4 | 4 |
| Antioxidant | 2 | 2 | 2 | 2 | 2 | 2 | 2 | 2 | 2 |
| Wax | 1 | 1 | 1 | 1 | 1 | 1 | 1 | 1 | 1 |
| Sulfur powder | 1 | 1 | 1 | 1 | 1 | 1 | 1 | 1 | 1 |
| Vulcanization accelerator NS | 1.5 | 1.5 | 1.5 | 1.5 | 1.5 | 1.5 | 1.5 | 1.5 | 1.5 |
| Evaluations | | | | | | | | | |
| Abrasion resistance index | 100 | 86 | 93 | 75 | 98 | 82 | 100 | 92 | 95 |
| Index of heat build-up property | 100 | 112 | 115 | 110 | 107 | 109 | 111 | 128 | 134 |
| Tip cut resistance index | 100 | 94 | 92 | 87 | 63 | 103 | 76 | 90 | 97 |

TABLE 4

| | Ex. | | | |
|---|---|---|---|---|
| | 4 | 5 | 6 | 7 |
| Amounts (part by weight) | | | | |
| NR | 90 | 80 | 70 | 60 |
| BR150L | - | - | - | 20 |
| VCR412 | - | - | - | - |
| VCR prototype | 10 | 20 | 30 | 20 |
| CB N110 | 40 | 35 | 30 | 35 |
| CB N220 | - | - | - | - |
| Zinc oxide | 3 | 3 | 3 | 3 |
| Stearic acid | 4 | 4 | 4 | 4 |
| Antioxidant | 2 | 2 | 2 | 2 |
| Wax | 1 | 1 | 1 | 1 |
| Sulfur powder | 1 | 1 | 1 | 1 |
| Vulcanization accelerator NS | 1.5 | 1.5 | 1.5 | 1.5 |

(continued)

| Evaluations | | | | |
|---|---|---|---|---|
| Abrasion resistance index | 100 | 98 | 96 | 97 |
| Index of heat build-up property | 118 | 124 | 129 | 131 |
| Tip cut resistance index | 100 | 100 | 100 | 95 |

EXAMPLES 8 to 12 and COMPARATIVE EXAMPLES 17 to 26

(Process for preparing a studless tire for testing)

The above compounding agents except for sulfur and a vulcanization accelerator were kneaded by a banbury mixer under the conditions of a kneading temperature of 150°C and a kneading time of 4 minutes according to compounding contents in Tables 5 and 6.
Then, the sulfur and vulcanization accelerator were added, and the mixture was kneaded by using an open roll under the conditions of a kneading temperature of 40°C to 60°C and a kneading time of 4 minutes. The kneaded article was extrusion-molded to prepare a rubber sheet by using an extruder.
The obtained rubber sheet was molded into the shape of a tread and laminated with other tire parts, and vulcanized for 35 minutes at 150°C, thereby, respective test studless tires (tire size 11R22.5) of Examples 8 to 12 and Comparative Examples 17 to 26 were prepared and used for the following measuring tests.

<Tensile test>

Test pieces were cut out from the above-described studless tires for testing, and a tensile test was carried out on these test pieces in accordance with JIS K6251. Elongations at break were measured and expressed as indices respectively according to the following calculation equation to evaluate the elongations.

(Elongation index of Examples 8 to 10 and Comparative Examples 17 to 22) = (Elongation at break of Examples 8 to 10 and Comparative Examples 17 to 22)/(Elongation at break of Comparative Example 17) × 100

(Elongation index of Examples 11 and 12 and Comparative Examples 23 to 26) = (Elongation at break of Examples 11 and 12 and Comparative Examples 23 to 26)/(Elongation at break of Comparative Example 23) × 100

<On-ice performance test>

The studless tires for testing were mounted on a 4t-autotruck. An actual running was carried out at a temperature of -1°C to -6°C on a test course located in Asahikawa, Hokkaido. The tires were put on the lock brake at the time of reaching a speed of 30 km per hour, and a distance (breaking distance) from the braking until stopping was measured.
A driver conducted sensory evaluations regarding starting, acceleration and stopping of the autotruck.
With respect to the braking distance calculated as described above and the sensory evaluations regarding starting, acceleration and stopping, assuming the braking distance of Comparative Example 17 as 100, other braking distances were expressed as indices, and further regarding the sensory evaluations, assuming Comparative Example 17 as 100, other examples were evaluated, and then, on-ice performance indices were calculated by taking an average from these results.

<Hardness>

A hardness of the test piece cut out from the studless tire was measured under a temperature of 0°C, using a JIS-A hardness meter.

Results of the above-described measuring tests are shown in Tables 5 and 6.

TABLE 5

|  | Ex. | | | | | Com. Ex. | | | |
|---|---|---|---|---|---|---|---|---|---|
|  | 8 | 9 | 10 | 17 | 18 | 19 | 20 | 21 | 22 |
| Amounts (part by weight) | | | | | | | | | |
| NR | 60 | 50 | 40 | 60 | 40 | 60 | 40 | 60 | 40 |
| BR | 20 | 30 | 30 | 40 | 60 | - | - | - | - |
| VCR412 | - | - | - | - | - | 40 | 60 | - | - |
| VCR prototype | 20 | 20 | 30 | - | - | - | - | 40 | 60 |
| CB N220 | 50 | 50 | 50 | 50 | 50 | 50 | 50 | 50 | 50 |
| Wax | 2 | 2 | 2 | 2 | 2 | 2 | 2 | 2 | 2 |
| Antioxidant | 2 | 2 | 2 | 2 | 2 | 2 | 2 | 2 | 2 |
| Stearic acid | 2 | 2 | 2 | 2 | 2 | 2 | 2 | 2 | 2 |
| Zinc oxide | 3 | 3 | 3 | 3 | 3 | 3 | 3 | 3 | 3 |
| Sulfur powder | 1 | 1 | 1 | 1 | 1 | 1 | 1 | 1 | 1 |
| Vulcanization accelerator NS | 1.5 | 1.5 | 1.5 | 1.5 | 1.5 | 1.5 | 1.5 | 1.5 | 1.5 |
| Evaluations | | | | | | | | | |
| Elongation index | 105 | 100 | 105 | 100 | 80 | 105 | 85 | 105 | 100 |
| Index of on-ice performance | 100 | 105 | 105 | 100 | 105 | 100 | 105 | 100 | 95 |
| Tire hardness | 67 | 67 | 67 | 64 | 65 | 68 | 69 | 69 | 71 |

TABLE 6

|  | Ex. | | | Com. Ex. | | |
|---|---|---|---|---|---|---|
|  | 11 | 12 | 23 | 24 | 25 | 26 |
| Amounts (part by weight) | | | | | | |
| NR | 60 | 60 | 60 | 60 | 60 | 60 |
| BR | 20 | 30 | 40 | 40 | 40 | - |
| VCR prototype | 20 | 10 | - | - | - | 40 |
| Egg shell powder | 15 | 15 | - | 15 | 25 | 15 |
| CB N220 | 50 | 50 | 50 | 50 | 50 | 50 |
| Wax | 2 | 2 | 2 | 2 | 2 | 2 |
| Antioxidant | 2 | 2 | 2 | 2 | 2 | 2 |
| Stearic acid | 2 | 2 | 2 | 2 | 2 | 2 |
| Zinc oxide | 3 | 3 | 3 | 3 | 3 | 3 |
| Sulfur powder | 1 | 1 | 1 | 1 | 1 | 1 |
| Vulcanization accelerator NS | 1.5 | 1.5 | 1.5 | 1.5 | 1.5 | 1.5 |
| Evaluations | | | | | | |
| Elongation index | 85 | 80 | 100 | 75 | 65 | 90 |
| Index of on-ice performance | 115 | 115 | 100 | 120 | 120 | 105 |
| Tire hardness | 68 | 66 | 64 | 65 | 66 | 69 |

INDUSTRIAL APPLICABILITY

According to the present invention, balance among abrasion resistance, tip cut resistance and heat build-up property of a tread can be improved by compounding a specific amount of a butadiene rubber comprising syndiotactic-1,2-polybutadiene having a small average primary particle diameter in a rubber composition for a tread.

Further, according to the present invention, balance among on-ice performance, elongation characteristics and hardness of a tread can be improved by compounding a specific amount of a butadiene rubber comprising syndiotactic-1,2-polybutadiene having a small average primary particle diameter in a rubber composition for a tread.

**Claims**

1. A rubber composition for a tread, which comprises:

   a rubber component comprising 10 to 30 % by weight of a butadiene rubber in which syndiotactic-1,2-polybutadiene having an average primary particle diameter of not more than 100 nm is dispersed in said butadiene rubber, and
   carbon black having a nitrogen adsorbing-specific surface area of 120 to 170 $m^2/g$.

2. The rubber composition for a tread of Claim 1, further comprising not less than 40 % by weight of a natural rubber in said rubber component.

3. A tire having a tread, which comprises the rubber composition for a tread of Claim 1 or 2.

4. A rubber composition for a tread, which is used for a studless tire and comprises a rubber component comprising 10 to 30 % by weight of a butadiene rubber in which syndiotactic-1,2-polybutadiene having an average primary particle diameter of not more than 100 nm is dispersed in said butadiene rubber.

5. The rubber composition for a tread of Claim 4, further comprising not less than 40 % by weight of a natural rubber in said rubber component.

6. A studless tire having a tread, which comprises the rubber composition for a tread of Claim 4 or 5.

## INTERNATIONAL SEARCH REPORT

| | International application No. |
|---|---|
| | PCT/JP2006/325763 |

A. CLASSIFICATION OF SUBJECT MATTER
*C08L21/00* (2006.01) i, *B60C1/00* (2006.01) i

According to International Patent Classification (IPC) or to both national classification and IPC

B. FIELDS SEARCHED

Minimum documentation searched (classification system followed by classification symbols)
*C08L7/00-23/00, B60C1/00*

Documentation searched other than minimum documentation to the extent that such documents are included in the fields searched

| *Jitsuyo Shinan Koho* | 1922-1996 | *Jitsuyo Shinan Toroku Koho* | 1996-2007 |
|---|---|---|---|
| *Kokai Jitsuyo Shinan Koho* | 1971-2007 | *Toroku Jitsuyo Shinan Koho* | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2005-247899 A (Ube Industries, Ltd.), 15 September, 2005 (15.09.05), Claims; Par. No. [0027] (Family: none) | 1-6 |
| Y | JP 06-199103 A (Bridgestone Corp.), 19 July, 1994 (19.07.94), Claims; table 3 | 1-3 |
| Y | JP 11-172044 A (Toyo Tire and Rubber Co., Ltd.) 29 June, 1999 (29.06.99), Claims (Family: none) | 4-6 |

| ☒ | Further documents are listed in the continuation of Box C. | ☒ | See patent family annex. |
|---|---|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 January, 2007 (24.01.07) | 06 February, 2007 (06.02.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/325763

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-225905 A  (Sumitomo Rubber Industries, Ltd.), 25 August, 2005 (25.08.05), Claims (Family: none) | 1-6 |

Form PCT/ISA/210 (continuation of second sheet) (April 2005)

| INTERNATIONAL SEARCH REPORT | International application No. |
| :---: | :--- |
| Information on patent family members | PCT/JP2006/325763 |

| | | | |
| :--- | :--- | :--- | :--- |
| JP 06-199103 A | 1994.07.19 | US 5420193 A1 | 1995.05.30 |
| | | CA 2106795 A | 1994.03.30 |

Form PCT/ISA/210 (patent family annex) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005225905 A

- JP 2005247899 A